# EUROPEAN PATENT APPLICATION

(11) **EP 2 355 577 A1**
(43) Date of publication of application: **10.08.2011**
(21) Application number: 11000428.0
(22) Date of filing: 20.01.2011
(51) Int. Cl.: H04W 36/00

(54) **Reducing resource allocations for inter-technology handover between wireless communication networks**

(30) Priority: 20.01.2010 US 296537 P; 18.01.2011 US 8327
(71) Applicant: Motorola Mobility, Inc., Libertyville, IL 60048 (US)
(72) Inventor: Sayeedi, Shahab M., Napperville Illinois 60540 (US)
(74) Representative: Openshaw, Paul Malcolm

(57) **Abstract**

Disclosed is a method for reducing resource allocations for inter-technology handover between heterogeneous wireless communication networks. The method includes a first step of completing network entry and new session registration procedures for a mobile station with a handover target technology network. A next step includes defining an activity mode of the new session. A next step includes waiting for the expiration of a resource timer at the target network. A next step includes assigning the resources for the new session upon the expiration of the timer.

## Description

### CROSS-REFERENCE TO RELATED APPLICATIONS

The present application claims priority to U.S. Provisional Patent Application 61/296,537, filed on January 20, 2010, which is incorporated herein by reference in its entirety.

### FIELD OF THE INVENTION

The present invention is related generally to wireless radio communication and, more particularly, to allocations used in handovers between wireless communication networks.

### BACKGROUND OF THE INVENTION

Mobile communication devices are presently being manufactured to operate in heterogeneous wireless communication networks utilizing different communication technologies. These different communication technologies can include 3G communication systems and 4G communication systems, such as Universal Mobile Telecommunications System (UMTS), High Speed Packet Access, cdma2000 High Rate Packet Data (HRPD) and 1x technologies, Long Term Evolution (LTE), Worldwide Interoperability for Microwave Access (WiMAX or IEEE 802.16), and Wireless Local Area Network (WLAN or IEEE 802.11) communication networks, among others.

As wireless standards continue to mature, standards-development organizations are actively working towards standardizing interworking and handover solutions for dual-mode devices capable of receiving service from two different radio access technologies (RATs), including LTE-HRPD networks, WiMAX-HRPD networks, WiMAX-WLAN networks, WiMAX-LTE networks, etc. Inter-technology or inter-RAT handovers between heterogeneous technologies become necessary when a mobile device traverses outside of its serving network technology domain into the domain of a target network operating a different wireless radio access technology than the serving network. For example, the mobile device may be receiving wireless service from an LTE or HRPD serving network and may require handover into a WiMAX access network which supports the IEEE 802.16 air interface technology or a Wi-Fi^{TM} network. In addition, inter-technology handover may become necessary in an overlaid access networks, i.e., two heterogeneous technology access networks serving the same network access area, where operator policy or service level agreements (SLAs) or user subscriptions determine what type of wireless service a mobile device is entitled to receive. For example, an enterprise user SLA dictates higher speed WiMAX 4G service instead of 3G HRPD services. A broadband network operator may also chose to offload traffic to an overlaid Wi-Fi™ network and back again if the Wi-Fi™ signal deteriorates.

To implement a handover between serving and target RATs, a target RAT may complete pre-authentication and pre-registration procedures and then provide communication resources to support the mobile device before the actual handover. Once resources are reserved, the target RAT will then wait for the handover, which may occur sometime later or may never occur at all. This reservation of resources wastes network resources at the target RAT which could be used to serve other active and revenue-generating users Of course, network operators have operational expectations when it comes to resource support, and these operators do not wish to waste any resources if not completely necessary. At present, resource-allocation schemes for inter-technology handover do not provide optimum resource utilization.

For example, if the heterogeneous target technology network does not delete previously created session contexts and data path or bearer connections (as in the case of an active-mode session) created to support inter-RAT handover, then the number of session contexts, bearer connections, and active- or idle-mode sessions could quickly overwhelm access-network implementations. At the same time, deleting pre-registered session context and bearer connections (when created) too soon may result in inter-technology handover failure because the MS is currently unaware when this occurs. When handover becomes necessary, and the mobile device requires an inter-technology handover due to degraded RF at the serving technology network, the target network, in response to the mobile-initiated handover, attempts to retrieve the previously created session context for the MS from the SFF (Signaling Forwarding Function). However, if the session context was deleted to manage resources, then it will not be found. In this case, the call will either drop because the serving network can no longer support the call, or the MS will be required to repeat network entry by repeating network entry authentication and session registration procedures at the target technology node. Completing these procedures at the time of inter-technology handover results in significant and unacceptable latency delays, especially when real-time services such as voice, streaming video, and gaming are active.

### BRIEF SUMMARY

The present invention provides a technique for reducing resource allocations for inter-technology handover between wireless communication networks. In particular, the present invention provides a notification to the MS, which completed pre-authentication and pre-registration network entry procedures (or session pre-registration procedures) in a target technology network, when its session context has been deleted or prior to its deletion. By notifying the MS of this deletion, handover failures can also be avoided. Specifically, upon completion of session pre-authentication and pre-registration procedures by mobiles for inter-RAT handover, a network will initiate an idle-mode exit or a network-initiated handover to force a dual-mode MS to handover to the target technology network. This may occur as a result of a large number of mobiles completing session pre-registration for future inter-technology handover (e.g., WLAN users). If an MS rejects a network-initiated inter-RAT handover to a target technology network, then the target technology network releases the pre-registered session and cancels pre-registration for that MS. Both idle-mode exit and network-initiated handover procedures result in the MS handing over from the serving technology network to the target technology network and thereby receiving packet data service from the serving technology network. The idle-mode and active-mode sessions referred to here may comprise a pseudo-idle-mode or pseudo-active-mode state prior to the inter-RAT handover, while the MS continues receiving service from its serving network because some of the resources present if the MS were actually receiving service from the target network may not be allocated, e.g., an air-interface channel or certain bearer connections.

### BRIEF DESCRIPTION OF THE SEVERAL VIEWS OF THE DRAWINGS

The invention is pointed out with particularity in the appended claims. However, other features of the invention will become more apparent and the invention will be best understood by referring to the following detailed description in conjunction with the accompanying drawings of which:

Figure 1 illustrates a mobile station transitioning between different technology networks via roaming;

Figure 2 illustrates a mobile station transitioning between different technology networks;

Figure 3 illustrates a generalized communication system to implement handover between a WiMAX and a non-WiMAX network;

Figure 4 illustrates a generalized communication system to implement handover between a WiMAX and an HRPD network;

Figure 5 illustrates a call flow of a communication system in accordance with the present invention;

Figure 6 illustrates a call flow in accordance with a first embodiment of the present invention;

Figure 7 illustrates a call flow in accordance with a second embodiment of the present invention;

Figure 8 illustrates a call flow in accordance with a third embodiment of the present invention;

Figure 9 illustrates a call flow in accordance with a fourth embodiment of the present invention;

Figure 10 illustrates a call flow in accordance with a fifth embodiment of the present invention;

Figure 11 illustrates a call flow in accordance with a sixth embodiment of the present invention; and

Figure 12 illustrates an example of a method in accordance with the present invention.

### DETAILED DESCRIPTION

The following description focuses on embodiments of the invention applicable to handover between WiMAX and non-WiMAX technologies. As used herein, 3GPP, 3GPP2 (e.g., cdma2000 HRPD and cdma2000-1x), and IEEE (e.g., Wi-Fi™) networks are referred to as non-WiMAX technologies. However, it will be appreciated that the invention is not limited to these applications but may be applied to many other cellular communication systems such as a 3GPP (Third Generation Partnership Project) E-UTRA (Evolutionary UMTS Terrestrial Radio Access) standard, a 3GPP2 (Third Generation Partnership Project 2) Evolution communication system, an LTE communication system, and other WLAN communication system as described by the IEEE 802.xx standards, for example, the 802.11a/HiperLAN2, 802.11g, 802.16, or 802.21 standards, or any of multiple other proposed ultrawideband communication systems. As used herein, the term BS can represent a base station, access point, NodeB, evolved NodeB, or other similar device, and the term MS can represent a mobile station, subscriber station, access terminal, user equipment, and the like.

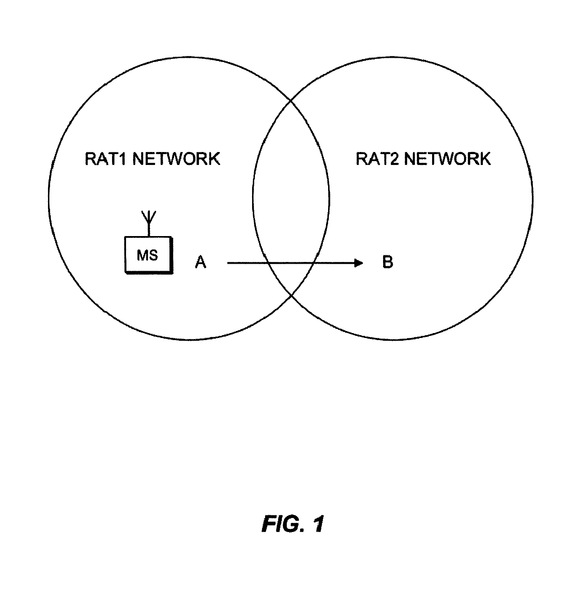

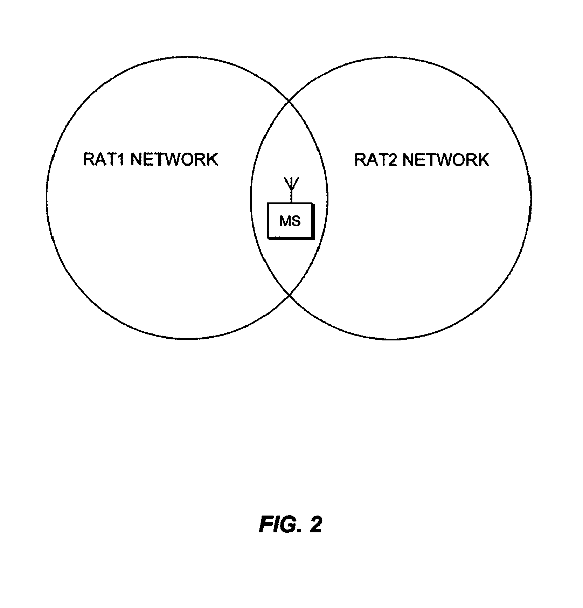

Figure 1 shows dual technology (RAT1, RAT2) communication networks where an MS will handover from RAT1 to RAT2 when moving from area A to area B. Figure 2 shows dual technology (RAT1, RAT2) communication networks where an MS will handover from RAT1 to RAT2 without moving. Both scenarios are addressed by the present invention in the examples discussed below for inter-technology handover for a multi-mode single radio mobile device.

As used herein, multi-mode single-radio devices are capable of receiving signals from other heterogeneous technology networks while continuing a session on the network from which they are presently receiving service. These devices are not equipped with hardware for a second transmitter and therefore can only transmit on a single technology at a time. They may however include single or multiple receivers. Multi-mode dual-transmitter devices can concurrently transmit on two air interface technologies concurrently since each transmitter transmits independently, however dual-transmitter radios are costly due to the additional transmitter circuitry. Furthermore, dual or multi-transmitter radios have shorter battery life due to their dual transmit capability. Hence even dual or multi-transmitter devices may operate in dual-mode single-radio mode. At present, operators desire to use single radio devices with dual transmitter performance.

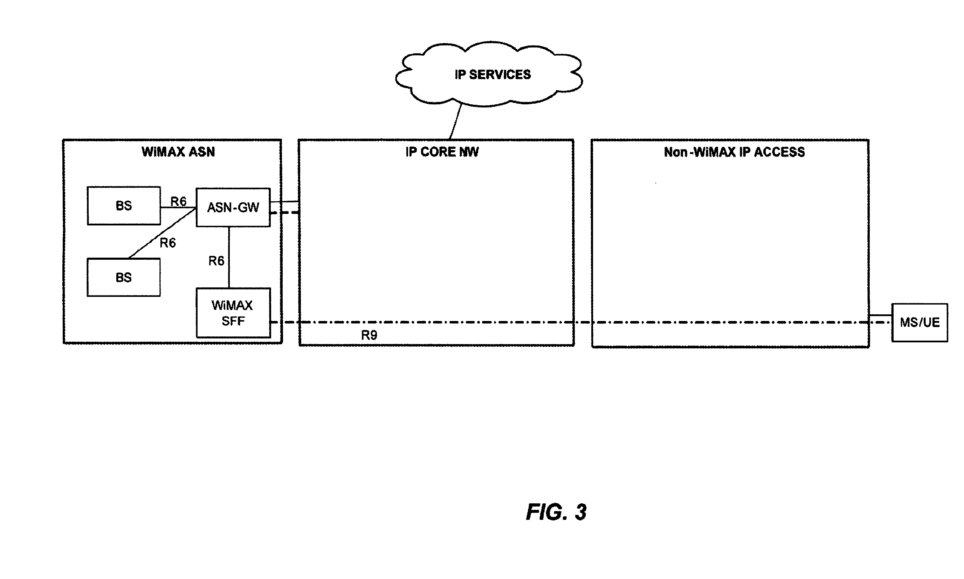

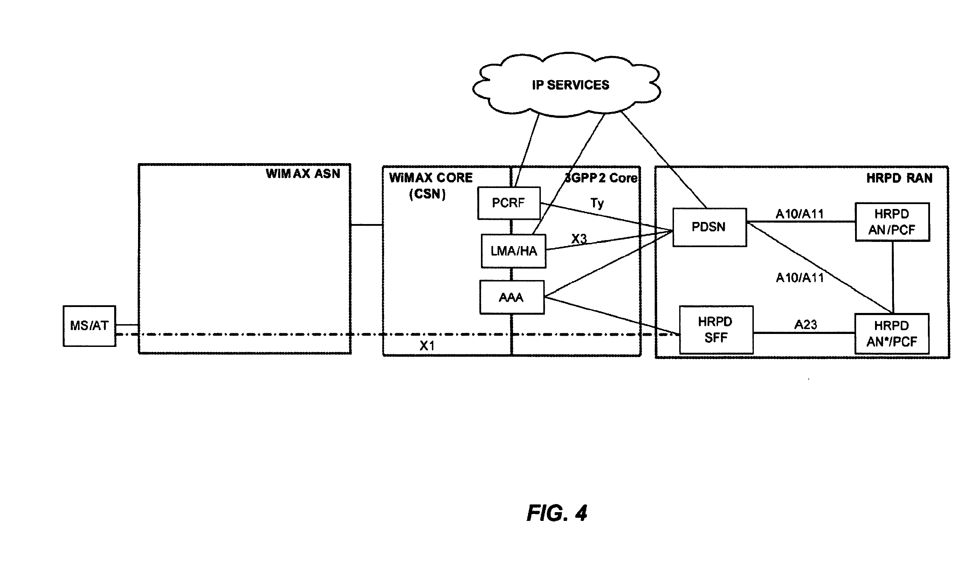

Figure 3 shows an interworking architecture for supporting inter-technology handover for dual-mode single-radio devices from a non-WiMAX network such as HRPD, LTE, and WLAN networks, to a WiMAX network. This architecture has been developed by the WiMAX Forum Network Working Group. A similar interworking architecture for completing inter-technology handover from a WiMAX to an HRPD network has been specified by 3GPP2 standards and is shown in Figure 4. Additional architectures have also been developed to support HRPD-3GPP interworking.

The architectures shown in Figures 3 and 4 both include support for a SFF network entity which supports dual-mode single-radio handover between heterogeneous RATs. The SFF emulates a BS in the target technology network and provides L2/L3 tunneling support between the MS and target network for network entry, pre-authentication, and pre-registration prior to inter-technology handover in order to reduce latency delays before inter-technology handover actually takes place. Tunneling messages between the MS and the target network through the serving network allow a multi-mode mobile device to pre-establish a session at the target technology network using a single transmitter while continuing to receive services from the serving network and also allow for bypassing the need for a second transmitter to directly communicate with the target network to complete session pre-registration for inter-technology handover.

A WiMAX SFF in the WiMAX network communicates with an MS in the non-WiMAX network using 802.16-based air interface signaling to complete session pre-registration while continuing to receive service from a non-WiMAX Access Network. An 'R9' reference point between the MS and the WiMAX SFF is used to tunnel IEEE 802.16 MAC layer signaling to and from the MS over the non-WiMAX Access Network. This avoids the need for second transmitter circuitry in the mobile device. A similar interface in the HRPD network supports HRPD L3 tunneling between the HRPD network and WiMAX or LTE network.

The WiMAX SFF facilitates all session pre-registration procedures necessary to facilitate session context creation in the target network including network entry, pre-authentication, and pre-registration of packet sessions for the MS while it is operating and receiving service in the non-WiMAX Access Network prior to inter-technology handover to the WiMAX Network. An HRPD SFF exists in the HRPD network to support inter-technology handovers from non-HRPD networks into the HRPD network. Completing these procedures prior to actual inter-technology handover helps to significantly reduce latency delays associated with such handovers. While such SFF-based network architectures are necessary for supporting single-radio mobile devices, i.e., mobile devices with a single transmitter that can only transmit on a single technology at a time, they can also be used to provide inter-technology handover support for dual-radio or multi-radio mobile devices when these devices operate in *single-radio* mode.

While dual-radio mobile devices can support inter-RAT handovers by communicating directly with the access point in the target technology network and without the network enhancements required to support tunneling, as previously indicated they are more costly to build and consume greater power thereby reducing battery life. For these reasons, operators are often opting to provide single-radio devices to their customers and are upgrading their networks to provide tunneling support to support these radios.

Two modes of single-radio (SR) handover are supported in WiMAX: (1) Pseudo-active mode SR handover, which includes support for WiMAX session pre-registration while the MS continues receiving service from the serving non-WiMAX network. Once pre-registration is completed, pseudo-active mode inter-RAT handover may be completed at any time by the MS (or not at all). (2) Pseudo-idle mode SR handover, which includes support for WiMAX session pre-registration while the MS continues receiving service from the serving non-WiMAX network. Once pre-registration is completed, the SR MS completes WiMAX idle-mode entry from the serving non-WiMAX network. The SR MS defers actual inter-technology handover to the target WiMAX network until it becomes necessary. These modes require network resources to be allocated for the session pre-registered MS. These include resources to maintain session context information, SFF resources, network data path or bearer connection resources, inter-technology tunnel resources (e.g., R9), and any other resources specific to maintaining a pseudo-idle-mode or pseudo-active-mode state at the target WiMAX network. However, fewer resources are required to maintain this pseudo-idle mode prior to inter-technology handover into the WIMAX network compared to the pseudo-active mode prior to inter-technology handover over into the WiMAX network.

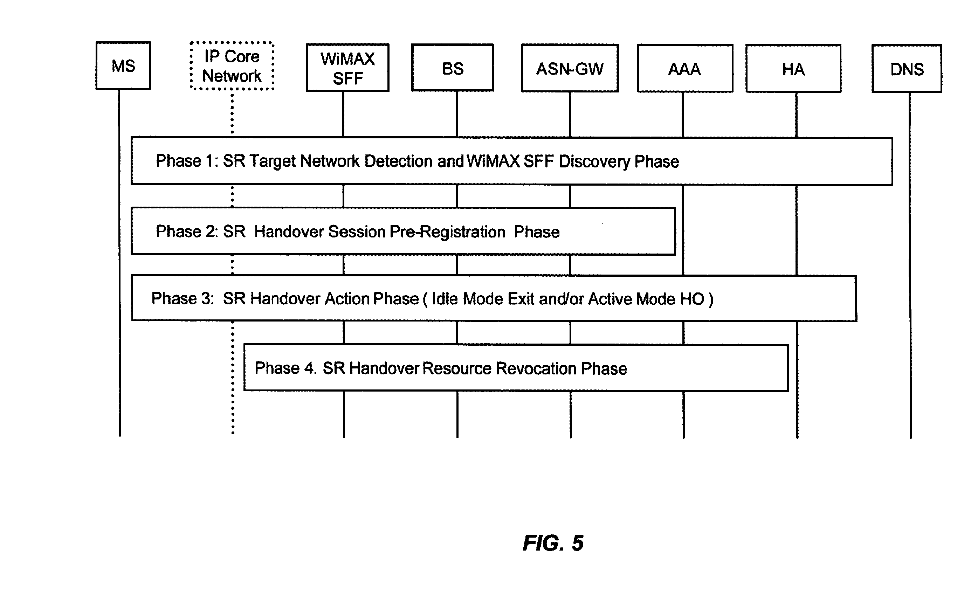

Figure 5 shows a call flow that provides a high level illustration of inter-technology handover support from a non-WiMAX serving network to a WiMAX target network, in accordance with a general embodiment of the present invention, which is targeted towards Idle Mode and Active Mode SR inter-technology handover support. Idle Mode may also be referred to as dormant mode in various other technologies and describes a state where an MS may be in a state where some communication resources may be released due to inactivity between the MS and the network, and is applicable when the mobile device completes session pre-registration in the target technology network but defers inter-technology handover and continues receiving service from the non-WiMAX network until handover becomes necessary at a later time (or perhaps never at all). In this case, network resources are consumed to support the pseudo-idle-mode and pseudo-active-mode states in the target technology network.

In phase 1 of the call flow, the MS acquires measurement information and a base station identification of a target BS located in a WiMAX radio access network and discovers the address of the WiMAX SFF. WiMAX network information may be received over the air from a WiMAX BS or tunneled to the MS over an R9 interface, then over the native non-WiMAX air interface in the non-WiMAX network.

In phase 2 of the call flow, the MS completes 802.16-based initial network entry procedures into the target WiMAX network while continuing to receive service from the serving non-WiMAX network thereby completing session pre-registration prior to the inter-technology handover. Since the MS only has a single-radio transmitter or a single enabled radio transmitter (in a dual-radio MS), the air interface signaling is tunneled on the native non-WiMAX air interface at the serving network over the R9 inter-RAN interface to the WiMAX SFF which emulates a WiMAX access point.

Upon completion of phase 2, the MS has a session in the serving non-WiMAX network where it continues to receive service and a new pre-registered session in the target WiMAX network where its WiMAX session context is stored at the SFF. The MS may initiate idle-mode entry in the target WiMAX network and continue receiving service in the non-WiMAX serving network until handover to the target WiMAX network becomes necessary, or it may just leave the session in pseudo-active mode without exchanging data with the target WiMAX network. By completing phase 2 procedures prior to the actual handover procedure, latency delays can be significantly reduced compared to if these procedures were to be completed at the time of handover, when RF at the serving signal may deteriorate rapidly.

In phase 3 of the call flow, if the WiMAX pre-registered session was left in active mode, the MS initiates existing 802.16 air interface procedures with a WiMAX target BS to handover into the WiMAX network. If the MS initiated idle-mode entry at the WiMAX network during Phase 2, then the MS initiates the existing WiMAX idle-mode exit procedure at a WiMAX BS resulting in handover into the WiMAX network. It may alternatively enter active mode without handover, followed by initiating handover signaling to trigger handover into the target WiMAX network. Regardless of whether active handover signaling or idle-mode exit procedures are initiated to trigger or cause handover, at this point the MS has successfully completed handover into the WiMAX network and may begin to receive service from it while the it is no longer receiving service from its previous serving network.

Upon completion of session pre-registration procedures in the target network, the SFF or target technology network may maintain a session timer for determining when to delete pre-registered contexts. Upon expiry of this timer, the pre-registered context is purged from the network. This is done so that the SFF/target network need not indefinitely maintain context and network resources for thousands of pre-registered MSs that might never complete a handover into the WiMAX network.

These resources could be better used when allocated to revenue-producing calls upon completion of the inter-technology handover, particularly if the MS remains in active or pseudo-active mode. The MS may not complete handover, for example, if the user's session ended at the serving network, or if the MS traversed back into a non-overlaid/non-WiMAX network, or to avoid ping-pong handovers, i.e., handover back and forth between two access points, in this case when the access points are located within heterogeneous networks.

In addition to the above general embodiment, the present invention provides several specific embodiments (discussed below) that reduce resources for supporting inter-technology handover. In these embodiments, upon completion of session pre-registration at the target technology network, inter-technology handover to the target network is deferred because the MS is satisfied with the RF strength at its current serving network and continues receiving service from it while maintaining an active/pseudo-active- or idle/pseudo-idle-mode session at the target network until a handover becomes necessary.

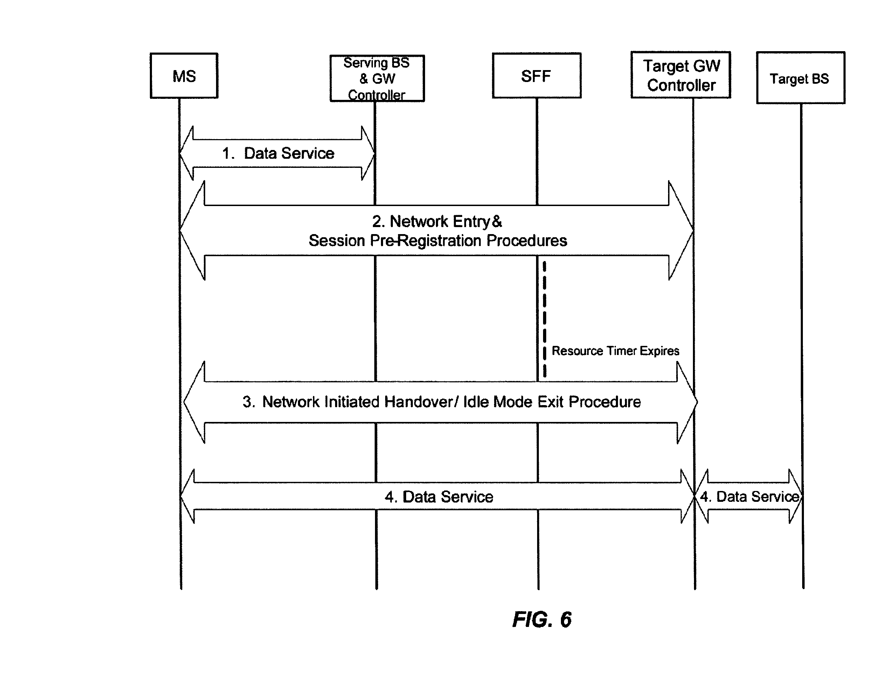

Figure 6 shows a first embodiment of the present invention where a target network initiates an inter-technology handover via a network-initiated handover procedure or idle-mode exit procedure to force the MS to handover to the target network.

In step 1, the MS is receiving services from its current serving network, as is known in the art.

In step 2, the MS detects the presence of a heterogeneous technology target network and initiates network entry and session pre-registration procedures at the target technology network. Network entry and session pre-registration signaling procedures between the MS and target network are completed via a signaling tunnel established among the MS, serving network, and target network SFF and GW controller, as is known in the art. Upon successful session pre-registration at the target network and transitioning to the active state, the MS may optionally initiate idle-mode entry procedures with the target network by sending a message such as the DREG-REQ message to the WiMAX network, receiving a DREG-CMD response message in response, and entering idle-mode (a.k.a. dormant-mode in some other technologies). Idle-mode signaling procedures between the MS and target network are completed via tunneling among the MS, serving network, and target network SFF/GW controller.

In step 3, in accordance with the present invention, after a period of time, e.g., upon expiration of a resource timer at the target network SFF, the target technology network triggers the MS to complete an inter-technology handover to the target network. The MS, dissatisfied with its current RF signal at its serving network or alternatively satisfied with the RF signal at the target network, agrees to the handover.

To trigger network-initiated handover if the MS is in pseudo-active mode, the target network, e.g., sends an MOB_BSHO-REQ message to the MS via the tunneled network interface. The MS agrees to the handover by sending an MOB_HO-IND message back to the target network, then begins ranging at a target BS in the target technology network by sending a RNG-REQ message over the air to a target BS in the target technology network to complete the inter-technology handover.

To trigger handover to the target network if the MS is in pseudo-idle mode, the target network, e.g., sends an idle-mode exit message such as an MOB_PAGADV message to the MS via the tunneled network interface. The MS agrees to the handover by sending an RNG-REQ message to a target BS in the target network to exit pseudo-idle mode and enter active mode in the target technology network completing the handover. The MS leaves its serving network. Alternatively, the MS may exit pseudo-idle mode and enter the pseudo-active mode, then complete active handover to the target technology network via either MS-initiated or network-initiated handover signaling.

In step 4, in accordance with the present invention, upon completion of the handover to the target technology network, resources at the serving network may be released. The serving network is no longer involved in providing service to the MS, and the MS now receives service directly from the target technology network. Packets directed to the MS are routed from the home agent or core network directly to the target network.

It should be noted that handover to the target network may be to any target BS and ASN-GW controller in the target network depending on whether the MS experienced further mobility after completing network entry and registration in the target network.

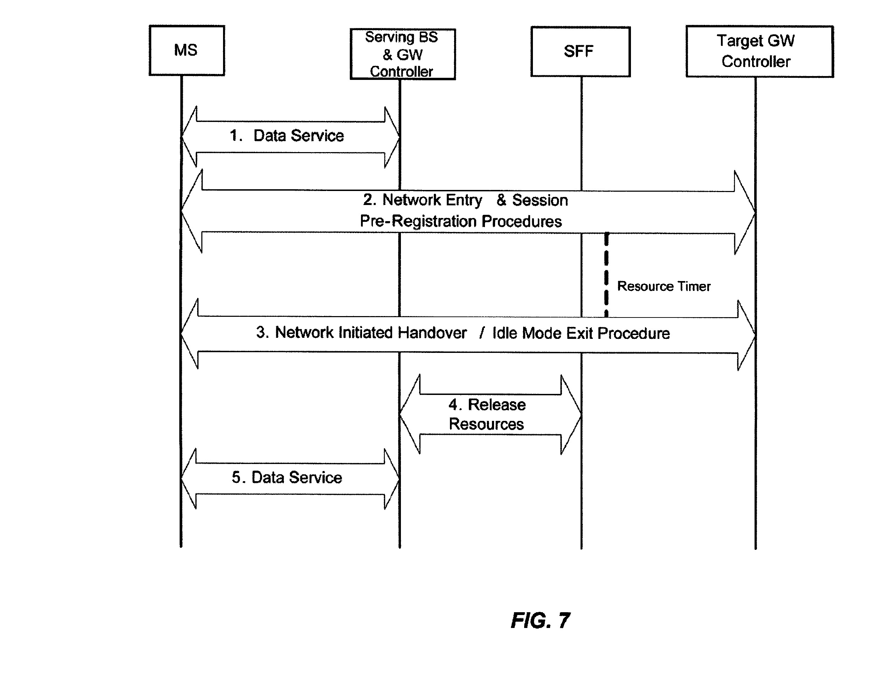

Figure 7 shows a second embodiment of the present invention where a target network initiates an inter-technology handover via a network-initiated handover procedure or idle-mode exit procedure to force the MS to handover to the target network. In this embodiment the MS rejects handover initiated by the target technology network.

In step 1, the MS is receiving services from its current serving network, as is known in the art.

In step 2, the MS detects the presence of a heterogeneous technology target network and initiates network entry and session pre-registration procedures at the target technology network. Network entry and session preregistration signaling procedures between the MS and target network are completed via tunneling among the MS, serving network, and target network SFF and GW controller, as is known in the prior art. Upon successful session pre-registration at the target network and transitioning to the active state, the MS may optionally initiate idle-mode entry procedures with the target network by sending a message such as the DREG-REQ message to the WiMAX network and receiving a DREG-CMD response message in response, then entering idle-mode. Idle-mode signaling procedures between the MS and target network are completed via tunneling among the MS, serving network, and target network SFF/GW controller.

In step 3, in accordance with the present invention, after a period of time, e.g., upon expiration of a resource timer at the target network SFF, the target technology triggers the MS to complete an inter-technology handover to the target network or to release resources reserved for it so that these resources can be reallocated to other revenue-producing calls. The MS, satisfied with its current RF signal at its serving network or alternatively dissatisfied with the RF signal at the target network, rejects the request from the target technology network to complete inter-technology handover to the target network.

In step 4, in accordance with the present invention, the target technology SFF and GW controller release all resources reserved for the MS including the previously generated session context information, any data path or bearer connections, and any other resources allocated to support the pseudo-active-mode or pseudo-idle-mode session, making them available for other potential inter-technology handovers or revenue-producing calls.

In step 5, in accordance with the present invention, the MS continues receiving services from its current serving technology network. If RF begins to fade or the target technology network begins to strengthen (as a result of MS mobility), the MS initiates new session pre-registration procedures at the target network as it is aware that its previously allocated session at the target network was released and a new session pre-registration must first be completed. In the prior art, MS would not have known this and inter-technology handover would likely have failed or resulted in unacceptable latency delays.

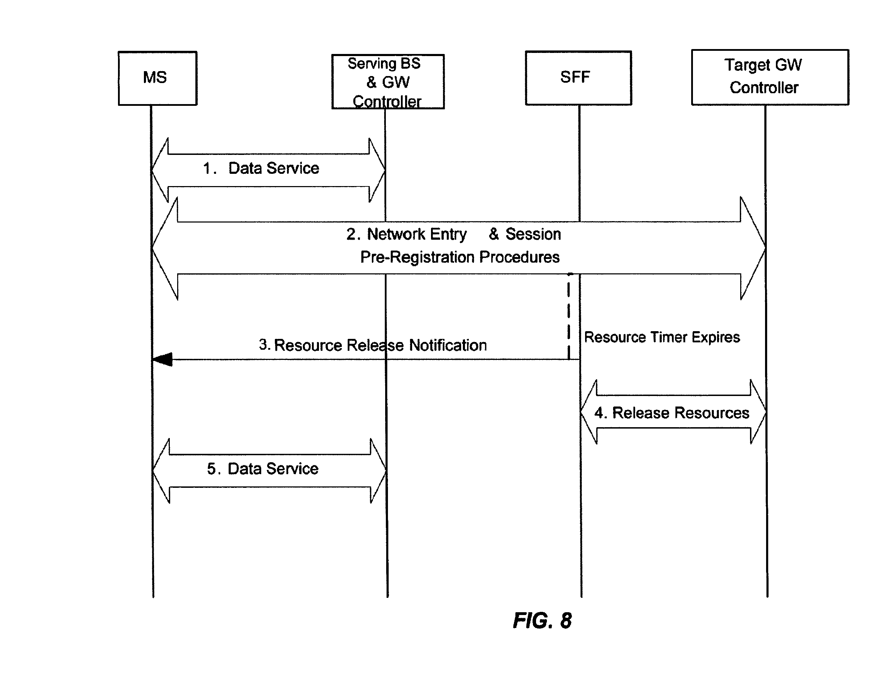

Figure 8 shows a third embodiment of the present invention with the same steps 1 and 2 as in the first embodiment. In step 3, in accordance with the present invention, an SFF sends a tunneled message to the MS via the serving network notifying the MS that resources reserved for the MS in the target network are being released. In step 4, the target technology network releases all resources reserved for the MS including the previously generated session context information, network data path or bearer connections, and any other resources allocated to support the pseudo-active-mode or pseudo-idle-mode session, making them available for other potential inter-technology handovers or revenue-producing calls. The MS continues receiving service from its current serving network.

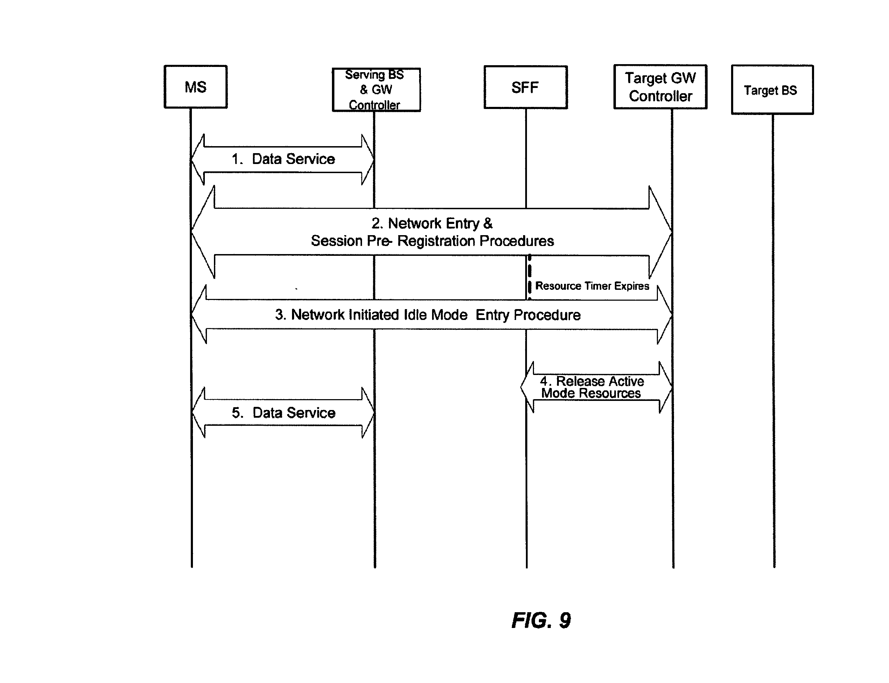

Figure 9 shows a fourth embodiment of the present invention with the same steps 1 and 2 as in the first embodiment except that instead of transitioning to pseudo-idle mode, the MS leaves its pre-registered session in pseudo-active mode and defers inter-technology handover to the target network, thereby consuming pseudo-active mode resources while the mobile continues receiving service from its current serving network.

In step 3, in order to free up resources required to support pseudo-active mode such as network data path or bearer connections, the network upon detecting that no inter-technology handover has occurred from the MS in pseudo-active mode after a period of time such as upon expiration of a resource timer at the SFF, the network requests the MS to transition to pseudo-idle mode or to network-initiated pseudo-idle mode entry which consumes fewer network resources than the pseudo-active mode. The target network sends a DREG_CMD message via the signaling tunnel requesting the MS to enter idle or pseudo-idle mode. The MS recognizing that inter-technology handover may be still be required later agrees to enter pseudo-idle mode by responding with a DREG-REQ message to the target technology network and then entering idle or pseudo-idle mode.

In step 4, the target network releases any resources required to support pseudo-active mode for the MS, for example data path connections or network bearer connections, making them available to other pre-registered active-mode sessions or revenue producing calls leaving the minimal resources to the MS required to support it in a pre-registered idle-mode session.

In step 5, the MS continues receiving services from the serving network. The target network maintains a pre-registered idle-mode session in case inter-technology handover becomes necessary.

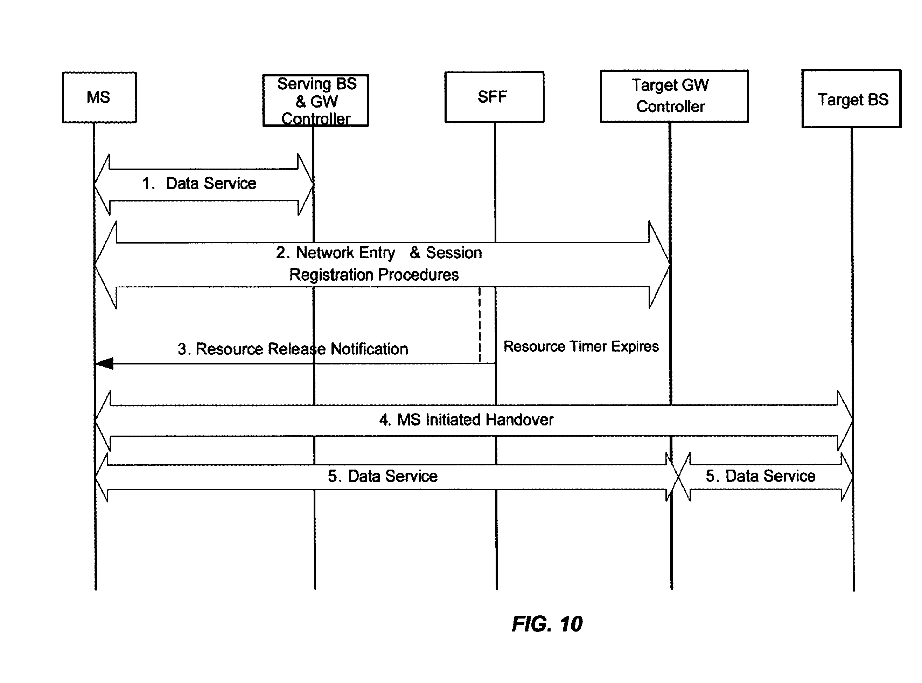

Figure 10 shows a fifth embodiment of the present invention with the same steps 1 through 3 as in the third embodiment. In step 4, in accordance with the present invention, upon receipt of a tunneled resource release notification message at the MS (in step 3), the MS initiates handover to the target technology network (by sending, e.g., an MOB_MSHO-REQ message to the target technology network indicating a preferred target BS, receiving an MOB_BSHO-RSP message from the network confirming or proposing an alternate target BS, responding with an MOB_HO-IND message acknowledging a handover to the mutually accepted target BS, then sending an RNG-REQ message to the target BS after which inter-technology handover is completed by the MS to the target technology network). In step 5, the MS receives service from the target network, and the serving network resources may be released.

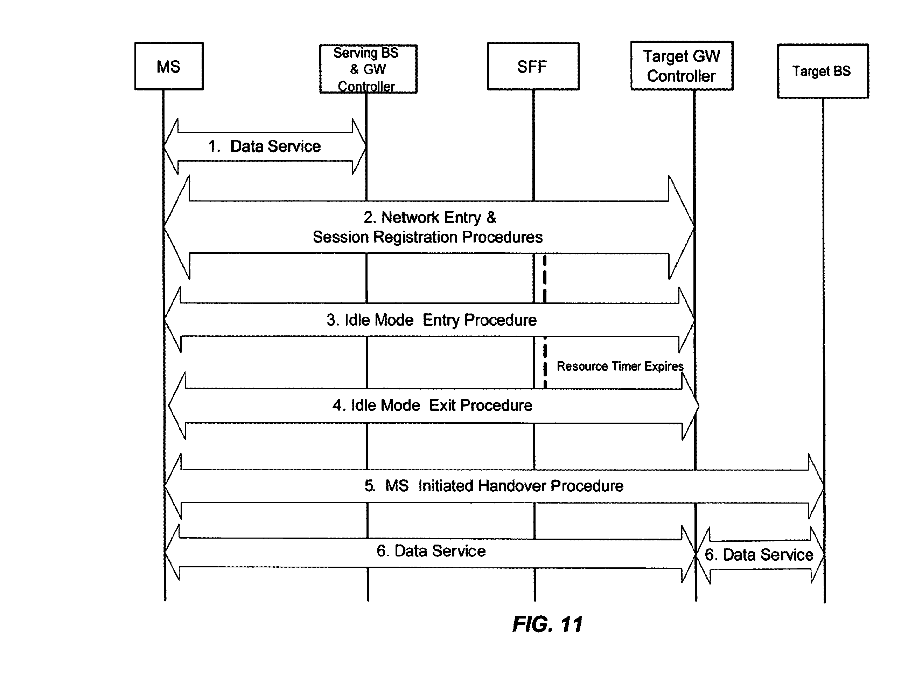

Figure 11 shows a sixth embodiment of the present invention. Upon completion of session pre-registration and idle-mode entry in the target technology network, the MS exits idle-mode and enters active or pseudo-active mode while continuing to receive services from its current serving network In step 5, in accordance with the present invention, the MS initiates handover to the target technology network. In step 6, the MS receives service from the target network.

In an optional embodiment, during or after completion of the session registration procedure, the target RAT can notify the MS how long the session context will be maintained at the RAT before being released. If the MS doesn't complete the inter-RAT handover before timer expiry, it assumes the context has been deleted. Alternatively, a dual-mode MS is configured with a session timer during provisioning. If the MS does not complete the inter-RAT handover before timer expiry, it assumes the context has been deleted.

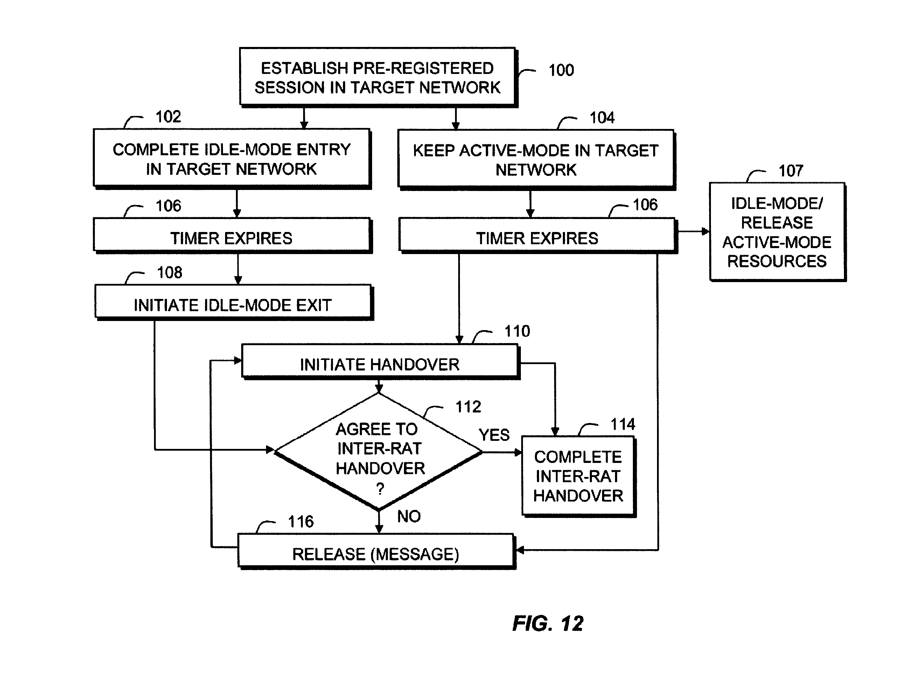

Figure 12 illustrates a method for reducing resource requirements during inter-technology handover between heterogeneous wireless communication networks. The method includes a first step 100 of completing network entry and session pre-registration procedures for a mobile station with a handover target technology network.

A next step includes defining an activity mode of the new session. This can include completing 102 session idle-mode entry procedures with the mobile station. Alternatively, this can include keeping 104 the session in the target network active (or even switching from an active to idle-mode as in the fourth embodiment of the present invention). Preferably, the completing steps 100, 102 are performed using a signaling tunnel established between the mobile station and the target network via a heterogeneous technology network serving the mobile station.

A next step 106 includes waiting for the expiration of a resource timer at the target network. The following steps describe how the resources for the new session are assigned upon the expiration of the timer.

In the third embodiment, a next step directly goes to releasing 116 the session resources reserved for the mobile station in the target network, wherein service is continued to be provided to the mobile station by its serving network. Otherwise, if the session is in idle-mode, a next step 108 includes the target network initiating session idle-mode exit procedures with the mobile station via the serving network using the signaling tunnel. Alternatively, in the fourth amendment, if an MS has not completed a handover after timer expiry, the MS is directed to enter idle mode, and the active mode resources are released in step 107.

A next step 110 includes initiating a handover procedure using the signaling tunnel. In the fifth and sixth embodiments, this step is initiated by the mobile station and is followed by step 114. Otherwise, this step is initiated by the target network and is followed by step 112.

A next step 112 includes deciding by the mobile station whether to agree to the inter-RAT handover by accepting or rejecting a handover command from the target network.

If accepted (as in the first embodiment of the present invention), the mobile station completes 114 the idle-mode exit procedure to handover where service is provided to the mobile station by the target network. If rejected (as in the second embodiment of the present invention), a next step includes releasing 116 the session resources reserved for the mobile station in the target network, wherein service is continued to be provided to the mobile station by its serving network. Alternatively, this step 116 (as in the third and fifth embodiment) first includes sending a release notification message to the mobile station, which can handover to the target network or stay in the serving network.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention.

## Claims

1. A method for reducing resource allocations for inter-technology handover between a serving wireless communication network and a target wireless communication network, the serving and target networks of heterogeneous technologies, the method comprising:
completing network entry and session pre-registration procedures for a mobile station with the target network via the serving network and allocating resources by the target network to support pseudo-idle or pseudo-active mode for the mobile station;
entering pseudo-idle mode or pseudo-active mode by the mobile station and continuing to receive service from the serving network;
starting a resource timer at the target network;
upon expiration of the resource timer, initiating inter-technology handover procedures with the mobile station by the target network via the serving network;
deciding by the mobile station whether to accept or reject an inter-technology handover request from the target network;
if the mobile station agrees to accept the inter-technology handover request, then completing inter-technology handover procedures and providing service to the mobile station by the target network;
if the mobile station rejects the inter-technology handover request, then releasing the resources to support pseudo-idle or pseudo-active mode reserved for the mobile station in the target network, wherein service is provided to the mobile station by the serving network; and
leaving pseudo-idle mode or pseudo-active mode by the mobile station.

2. The method of claim 1 wherein entering pseudo-idle mode comprises:
completing pseudo-idle-mode procedures with the target network via the serving network.

3. The method of claim 1 wherein completing inter-technology handover procedures comprises:
if the mobile station is in pseudo-idle mode, then completing pseudo-idle-mode handover procedures; and
if the mobile station is in pseudo-active mode, then completing pseudo-active-mode handover procedures.

4. A method for reducing resource allocations for inter-technology handover between a serving wireless communication network and a target wireless communication network, the serving and target networks of heterogeneous technologies, the method comprising:
completing network entry and session pre-registration procedures for a mobile station with the target network via the serving network and allocating resources by the target network to support pseudo-idle or pseudo-active mode for the mobile station;
entering pseudo-idle mode or pseudo-active mode by the mobile station and continuing to receive service from the serving network;
starting a resource timer at the target network;
upon expiration of the resource timer, sending a release notification message to the mobile station by the target network via the serving network;
releasing the resources to support pseudo-idle or pseudo-active mode reserved for the mobile station in the target network, wherein service is provided to the mobile station by the serving network; and
leaving pseudo-idle mode or pseudo-active mode by the mobile station.

5. A method for reducing resource allocations for inter-technology handover between a serving wireless communication network and a target wireless communication network, the serving and target networks of heterogeneous technologies, the method comprising:
completing network entry and session pre-registration procedures for a mobile station with the target network via the serving network and allocating resources by the target network to support pseudo-idle or pseudo-active mode for the mobile station;
entering pseudo-idle mode or pseudo-active mode by the mobile station and continuing to receive service from the serving network;
starting a resource timer at the target network;
upon expiration of the resource timer, sending a release notification message to the mobile station by the target network via the serving network;
initiating inter-technology handover procedures with the target network by the mobile station;
completing the mobile-initiated inter-technology handover procedures and providing service to the mobile station by the target network; and
leaving pseudo-idle mode or pseudo-active mode by the mobile station.

6. A method for reducing resource allocations for inter-technology handover between a serving wireless communication network and a target wireless communication network, the serving and target networks of heterogeneous technologies, the method comprising:
completing network entry and session pre-registration procedures for a mobile station with the target network via the serving network and allocating resources by the target network to support pseudo-active mode for the mobile station;
entering pseudo-active mode by the mobile station and continuing to receive service from the serving network;
starting a resource timer at the target network;
upon expiration of the resource timer, completing pseudo-idle-mode entry procedures with the mobile station via the serving network;
entering pseudo-idle mode by the mobile station; and
releasing the resources to support pseudo-active mode reserved for the mobile station in the target network, wherein service is provided to the mobile station by the serving network.
